(19) Europäisches Patentamt
European Patent Office
Office européen des brevets

(11) **EP 4 730 886 A1**

(12) **EUROPEAN PATENT APPLICATION**
published in accordance with Art. 153(4) EPC

(43) Date of publication:
**22.04.2026 Bulletin 2026/17**

(21) Application number: **24838772.2**

(22) Date of filing: **08.07.2024**

(51) International Patent Classification (IPC):
*H04W 72/044* (2023.01)

(52) Cooperative Patent Classification (CPC):
**H04B 17/327; H04B 17/373; H04L 5/00;
H04W 72/044; H04W 72/54**

(86) International application number:
**PCT/CN2024/104233**

(87) International publication number:
**WO 2025/011519 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.07.2023 CN 202310859018**

(71) Applicant: **Huawei Technologies Co., Ltd.
Shenzhen, Guangdong 518129 (CN)**

(72) Inventors:
• **LIU, Lifu
Shenzhen, Guangdong 518129 (CN)**
• **LI, Yuan
Shenzhen, Guangdong 518129 (CN)**
• **SUN, Yan
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **DATA TRANSMISSION METHOD AND ELECTRONIC DEVICE**

(57) A data transmission method and an electronic device are provided, and relate to the field of communication technologies, to reduce overheads consumed by a first device to report an RSRP value to a second device. The method is applied to the first device, and includes: obtaining a first reference signal received power RSRP set through a first time of beam sweeping; reporting a first reference RSRP value, where the first reference RSRP value is determined from the first RSRP set; obtaining a second RSRP set through a second time of beam sweeping; and reporting a first differential RSRP set based on the second RSRP set and the first reference RSRP value, where the first differential RSRP set is obtained by performing differential calculation on an RSRP value in the second RSRP set and the first reference RSRP value.

FIG. 9

**Description**

This application claims priority to Chinese Patent Application No. 202310859018.6, filed with the China National Intellectual Property Administration on July 12, 2023 and entitled "DATA TRANSMISSION METHOD AND ELECTRONIC DEVICE", which is incorporated herein by reference in its entirety.

**TECHNICAL FIELD**

This application relates to the field of communication technologies, and in particular, to a data transmission method and an electronic device.

**BACKGROUND**

A device with a communication function may establish a communication connection in a beam sweeping manner. A device (for example, a network device) with the communication function sends a plurality of downlink beams, and another device (for example, a terminal device) with the communication function sends a plurality of uplink beams. An aligned uplink beam and an aligned downlink beam form a beam pair, and the terminal device may obtain reference signal received power (reference signal received power, RSRP) values of the beam pair, select a preset quantity of beam pairs with largest RSRP values, and report the RSRP values of the selected beam pairs to the network device. The network device selects a beam pair from the beam pairs with the reported RSRP values, to establish a connection to the terminal device. However, reporting the RSRP values requires large overheads.

In a related technology, reporting differentiated RSRP values by the terminal device in a manner of differentiating RSRP values is proposed. For example, each time the terminal device reports RSRP values corresponding to five beams, the terminal device uses a largest RSRP value in five beam pairs as a reference RSRP value, and separately differentiates the remaining four RSRP values from the reference RSRP value, to obtain RSRP differential measurement values, and the terminal device reports the reference RSRP value and report values corresponding to the four RSRP differential measurement values, to save overheads of reporting the RSRP values. However, in this manner of reporting the RSRP values, overheads are still wasted.

**SUMMARY**

This application provides a data transmission method and an electronic device, to reduce overheads consumed by a first device to report an RSRP value to a second device.

To achieve the foregoing objective, embodiments of this application provide the following technical solutions.

According to a first aspect, a data transmission method is provided, applied to a first device. The method includes: obtaining a first reference signal received power RSRP set through a first time of beam sweeping; reporting a first reference RSRP value, where the first reference RSRP value is determined from the first RSRP set; obtaining a second RSRP set through a second time of beam sweeping; and reporting a first differential RSRP set based on the second RSRP set and the first reference RSRP value, where the first differential RSRP set is obtained by performing differential calculation on an RSRP value in the second RSRP set and the first reference RSRP value.

Based on the foregoing solution, when reporting an RSRP value, the first device may perform, based on a reference RSRP value selected last time, differential calculation on the RSRP value that needs to be reported, and report a first differential RSRP set obtained through the differential calculation. The first differential RSRP set occupies less overheads, so that overheads for reporting the RSRP value are saved.

In a possible implementation, reporting the first reference RSRP value includes: reporting the first reference RSRP value and a second differential RSRP set, where the second differential RSRP set is obtained by performing differential calculation on an RSRP value other than the first reference RSRP value in the first RSRP set and the first reference RSRP value.

Based on the foregoing possible implementation, the first device reports the first reference RSRP value and the second differential RSRP set, and the second device may receive the first reference RSRP value and the second differential RSRP set, and input the first reference RSRP value, the second differential RSRP set, and the first differential RSRP set into an AI model, to predict an RSRP value or an optimal beam at a future moment, so that the second device selects the optimal beam at the future moment.

According to a second aspect, a data transmission method is provided, applied to a second device. The method includes: receiving a first reference RSRP value, where the first reference RSRP value is determined by a first device from a first RSRP set obtained through a first time of beam sweeping; receiving a first differential RSRP set, where the first differential RSRP set is obtained by the first device by performing differential calculation on an RSRP value in a second RSRP set obtained by the first device through a second time of beam sweeping and the first reference RSRP value; and

obtaining the second RSRP set based on the first reference RSRP value and the first differential RSRP set, where the second RSRP set is obtained by the second device by performing inverse differential calculation on an RSRP value in the first differential RSRP set and the first reference RSRP value.

In a possible implementation, the method further includes: receiving a second differential RSRP set, where the second differential RSRP set is obtained by the first device by performing differential calculation on an RSRP value other than the first reference RSRP value in the first RSRP set and the first reference RSRP value, where the second differential RSRP set, the first differential RSRP set, and the first reference RSRP value are input into an artificial intelligence AI model; or obtaining the first RSRP set based on the first reference RSRP value and the second differential RSRP set, where an RSRP value other than the first reference RSRP value in the first RSRP set is obtained by performing inverse differential calculation on an RSRP value in the second differential RSRP set and the first reference RSRP value, where the first RSRP set and the second RSRP set are input into an AI model.

It may be understood that, for beneficial effects that can be achieved by the method provided in the second aspect, refer to the beneficial effects in the first aspect and the possible implementations provided above. Details are not described herein again.

According to a third aspect, a data transmission method is provided, applied to a first device. The method includes: obtaining a first RSRP set through a first time of beam sweeping; obtaining a second RSRP set through a second time of beam sweeping; obtaining predicted RSRP sets based on the first RSRP set and the second RSRP set, where there are a plurality of predicted RSRP sets, and the plurality of predicted RSRP sets include a first predicted RSRP set and a second predicted RSRP set; reporting a second reference RSRP value based on the first predicted RSRP set, where the second reference RSRP value is determined from the first predicted RSRP set; and reporting a first target differential RSRP set based on the second predicted RSRP set and the second reference RSRP value, where the first target differential RSRP set is obtained by performing differential calculation on an RSRP value in the second predicted RSRP set and the second reference RSRP value.

Based on the foregoing solution, when reporting a predicted RSRP value, the first device may perform, based on a second reference RSRP value selected last time, differential calculation on the predicted RSRP value that needs to be reported, and report a first target differential RSRP set obtained through the differential calculation. The first target differential RSRP set occupies less overheads, so that overheads for reporting the RSRP value are saved.

In a possible implementation, reporting the second reference RSRP value based on the first predicted RSRP set includes: reporting the second reference RSRP value and a second target differential RSRP set based on the first predicted RSRP set, where the second target differential RSRP set is obtained by performing differential calculation on an RSRP value other than the second reference RSRP value in the first predicted RSRP set and the second reference RSRP value.

Based on the foregoing possible implementation, the first device reports the second reference RSRP value and the second target differential RSRP set, and the second device may receive the reference RSRP value and the second differential RSRP set, and determine, based on the first reference RSRP value, the second differential RSRP set, and the first differential RSRP set, whether RSRP values predicted by the first device meet a preset condition, so that the second device selects an optimal beam at a future moment.

In a possible implementation, obtaining the predicted RSRP sets based on the first RSRP set and the second RSRP set includes: obtaining the predicted RSRP sets through prediction by using an AI model based on the first RSRP set and the second RSRP set.

According to a fourth aspect, a data transmission method is provided, applied to a second device. The method includes: receiving a second reference RSRP value, where the second reference RSRP value is determined by a first device from a first predicted RSRP set, the first predicted RSRP set is in predicted RSRP sets, and the predicted RSRP sets are obtained by the first device through prediction based on a first RSRP set and a second RSRP set; obtaining the first predicted RSRP set based on the second reference RSRP value; receiving a first target differential RSRP set, where the first target differential RSRP set is obtained by performing differential calculation on an RSRP value in a second predicted RSRP set and the second reference RSRP value, and the second predicted RSRP set is in the predicted RSRP sets; and obtaining the second predicted RSRP set based on the second reference RSRP value and the first target differential RSRP set, where the second predicted RSRP set is obtained by performing inverse differential calculation on an RSRP value in the first target differential RSRP set and the second reference RSRP value.

In a possible implementation, the method further includes: receiving a second target differential RSRP set, where the second target differential RSRP set is obtained by the first device by performing differential calculation on an RSRP value other than the second reference RSRP value in the first predicted RSRP set and the second reference RSRP value; and obtaining the first predicted RSRP set based on the second reference RSRP value includes: obtaining the first predicted RSRP set based on the second reference RSRP value and the second target differential RSRP set, where the RSRP value other than the second reference RSRP value in the first predicted RSRP set is obtained by performing inverse differential calculation on an RSRP value in the second target differential RSRP set and the second reference RSRP value.

According to a fifth aspect, an electronic device is provided. The electronic device includes a memory and a processor, and the memory is coupled to the processing unit. The memory is configured to store computer program code. The computer program code includes computer instructions. When the processing unit executes the computer instructions, the electronic device is caused to perform the method according to any one of the foregoing aspects and the implementations of the foregoing aspects.

According to a sixth aspect, a chip system is provided, including a processor and an interface circuit, where the processor and the interface circuit are interconnected by using a line. The interface circuit is configured to read instructions stored in a memory. When the instructions are executed by the processor, the chip system performs the method according to any one of the foregoing aspects and the implementations of the foregoing aspects.

According to a seventh aspect, a chip system is provided. The chip system includes a processor, configured to support an electronic device in implementing a function in any one of the foregoing aspects. In a possible design, the chip system further includes a memory. The memory is configured to store program instructions and data that are necessary for the electronic device. The chip system may include a chip, or may include a chip and another discrete device.

According to an eighth aspect, an electronic device is provided. The electronic device has a function of implementing the method according to any one of the foregoing aspects. The function may be implemented by using hardware, or may be implemented by hardware executing corresponding software. The hardware or the software includes one or more modules corresponding to the function.

According to a ninth aspect, an electronic device is provided, including a processor. The processor is configured to: after being coupled to a memory and reading instructions in the memory, perform the method according to any one of the foregoing aspects based on the instructions.

According to a tenth aspect, a computer-readable storage medium is provided, including computer instructions. When the computer instructions are run on an electronic device, the electronic device is caused to perform the method according to any one of the foregoing aspects and the implementations of the foregoing aspects.

According to an eleventh aspect, a computer program product is provided, including a computer program. When the computer program is executed by a processor, the method according to any one of the foregoing aspects and the implementations of the foregoing aspects is implemented.

It may be understood that, for beneficial effects that can be achieved by the method provided in the fourth aspect, refer to the beneficial effects in any one of the third aspect and the possible implementations provided above. For beneficial effects that can be achieved by the apparatuses, the computer-readable storage medium, and the computer program product provided in the fifth aspect to the eleventh aspect, refer to the beneficial effects in any one of the first aspect, the third aspect, and the possible implementations provided above. Details are not described herein again.

## BRIEF DESCRIPTION OF DRAWINGS

FIG. 1 is a diagram of a narrow beam and a wide beam;
FIG. 2 is another diagram of a narrow beam and a wide beam;
FIG. 3 is a schematic flowchart of beam management;
FIG. 4 is a diagram of reporting an RSRP by a terminal;
FIG. 5 is a diagram of transmitting a packet of a plurality of RSRPs by a terminal;
FIG. 6 is a diagram of a structure of a neuron;
FIG. 7 is a diagram of a layer relationship in a neural network;
FIG. 8 is a schematic flowchart of AI-based beam prediction;
FIG. 9 is a diagram in which a second entity reports an RSRP set to a first entity according to an embodiment of this application;
FIG. 10 is a diagram of an architecture of a communication system according to an embodiment of this application;
FIG. 11A is a diagram of an architecture of another communication system according to an embodiment of this application;
FIG. 11B is a diagram of a hardware structure of a communication device according to an embodiment of this application;
FIG. 12 is a schematic flowchart of a data transmission method according to an embodiment of this application;
FIG. 13 is another schematic flowchart of a data transmission method according to an embodiment of this application;
FIG. 14 is another schematic flowchart of a data transmission method according to an embodiment of this application;
FIG. 15 is another schematic flowchart of a data transmission method according to an embodiment of this application;
FIG. 16 is a diagram of a structure of a communication apparatus according to an embodiment of this application; and
FIG. 17 is a diagram of a structure of a chip system according to an embodiment of this application.

**DESCRIPTION OF EMBODIMENTS**

In the specification and accompanying drawings of embodiments of this application, terms "first", "second", "first time", "second time", and the like are intended to distinguish between different objects or distinguish between different processing of a same object, but do not indicate a particular order of the objects. Before processing on an object is performed for the "first time", one or more times of processing on the object may be further included.

In addition, terms "including" and "having" and any other variants thereof mentioned in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word "example", "for example" or the like is intended to present a relative concept in a specific manner.

To facilitate understanding of the technical solutions provided in embodiments of this application, technical terms in embodiments of this application are first described.

1. Beam

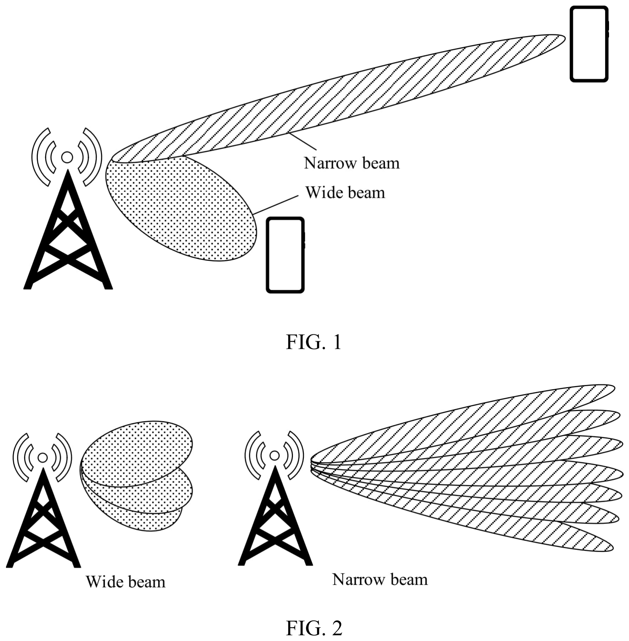

A beam is a communication resource. Communication devices such as a base station and a terminal may transmit information to each other by using the beam, to implement communication. With development of communication technologies, a spectrum of a beam used for the communication between the communication devices gradually evolves to a high band. Due to a physical transmission characteristic of a beam, a free space transmission loss and a penetration loss of a high-band beam are significantly higher than those of a low-band beam. To compensate for the foregoing disadvantages, a large antenna array is usually used in the high band to resist received beam energy attenuation caused by the losses. A wide beam may be obtained by using an antenna beamforming (beamforming) technology, or energy is concentrated in a narrow beam to form a narrow beam. Refer to FIG. 1 and FIG. 2. The wide beam has wide coverage and a short coverage distance. Compared with the wide beam, the narrow beam has a long coverage distance. Beamforming into the narrow beam can improve energy of a signal reaching a receive end, to counteract a loss of beam energy caused by a path.

2. Reference signal

A reference signal (reference signal, RS) is also referred to as a base reference signal or a pilot signal. The reference signal includes at least one of the following: a synchronization signal block (synchronization signal block, SSB) and a channel state information reference signal (channel state information reference signal, CSI-RS). In an existing standard, a wide beam is sent by configuring the SSB, and a narrow beam is sent by configuring the CSI-RS.

The SSB is a cell broadcast signal, and the SSB includes at least one of the following: a primary synchronization signal (primary synchronization signal, PSS), a secondary synchronization signal (secondary synchronization signal, SSS), a physical broadcast channel (physical broadcast channel, PBCH), and a demodulation reference signal (demodulation reference signal, DMRS). In addition, the SSB is not only used for beam management, but also used to implement functions such as initial access and time-frequency synchronization.

The CSI-RS signal is a user-level signal, and a network side sends one or more groups of CSI-RS signals based on an actual situation.

3. Beam management

Two communication entities may communicate with each other by using a beam pair, and a process of establishing and maintaining the beam pair between the two communication entities may be referred to as the beam management. For example, a first entity (for example, a base station) selects an appropriate transmit beam, and a second entity (for example, a terminal) selects an appropriate receive beam. The transmit beam and the receive beam form a beam pair, and the base station and the terminal may maintain a communication connection by using the beam pair.

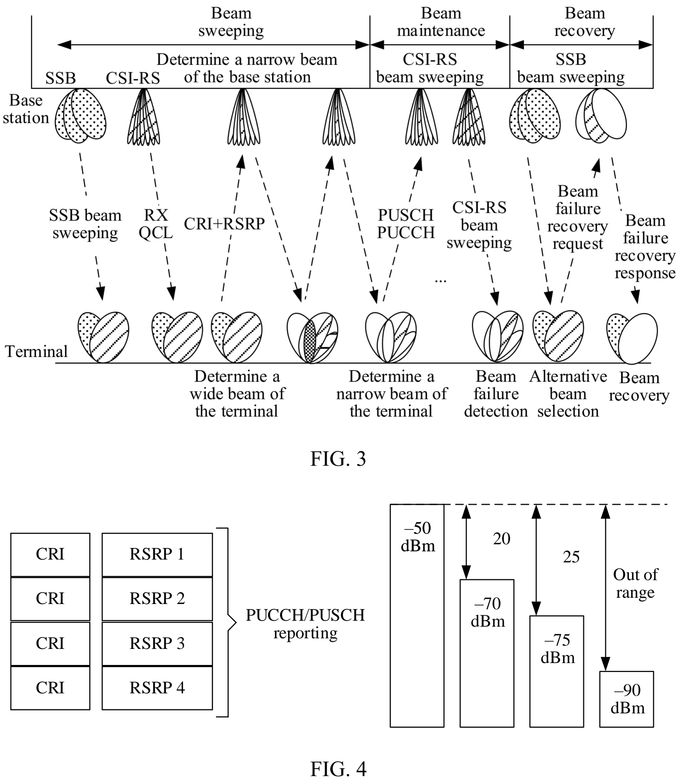

Refer to FIG. 3. The beam management may include procedures such as beam training, beam maintenance, and beam failure recovery (which may also be referred to as beam recovery). In a scenario in which the terminal moves, or the like, an original beam pair may be blocked. Consequently, the terminal and the base station cannot maintain an original communication connection. In this case, a connection for quickly recovering the beam pair may not be implemented between the terminal and the base station through beam adjustment, and another pair of beams may be quickly selected and established through the beam failure recovery procedure.

3.1. Beam sweeping

Due to hardware limitations, in some cases, the base station cannot simultaneously send a plurality of beams to cover an entire cell. To be specific, the base station may send a beam in a specific direction at a specific moment, and send different beams at a plurality of moments, to cover the entire cell by using the plurality of beams. To select a beam that is most suitable for the terminal, the terminal needs to sweep a large quantity of beams sent by the base station. Because the narrow beam has the long coverage distance and narrow coverage, compared with sweeping the wide beam, the terminal needs to sweep more narrow beams. This increases overheads of performing beam sweeping by the terminal.

To reduce the overheads consumed by the beam sweeping, a layered sweeping manner is used in the related technology. The wide beam is first swept, and the narrow beam is then swept, so that a quantity of beams to be swept is reduced in each time of beam sweeping, and the total overheads consumed by the beam sweeping are reduced.

For example, as shown in FIG. 3, the terminal may feed back measurement results that are of RSRP values of wide beams and that are sent by the base station. The terminal sweeps wide beams to obtain RSRPs corresponding to the corresponding wide beams, and reports the RSRPs to the base station. The base station may determine, in the received RSRPs, an identifier of a wide beam with a large RSRP. For example, the base station sends a wide beam 1, a wide beam 2, and a wide beam 3, and the terminal sweeps the wide beam 1, the wide beam 2, and the wide beam 3, to obtain an RSRP value obtained by sweeping the wide beam 1, an RSRP value obtained by sweeping the wide beam 2, and an RSRP value obtained by sweeping the wide beam 3, and reports the RSRP values to the base station. The base station may select a beam with a large RSRP value based on the RSRP value of the wide beam 1, the RSRP value of the wide beam 2, and the RSRP value of the wide beam 3, and obtain an identifier of the beam.

The base station configures one or more groups of CSI-RSs, where the one or more groups of CSI-RSs correspondingly form one group of narrow beams. The base station configures one or more groups of CSI-RS resources in a direction of a wide beam with a large RSRP, and sends narrow beams. The terminal sweeps the narrow beams, to obtain RSRP values corresponding to the corresponding narrow beams, and reports the RSRP values of the narrow beams to the base station. The base station may determine, based on the received RSRPs, an identifier of a narrow beam with a large RSRP. In addition, the CSI-RS signal is not only used for the beam management, but also used for channel quality measurement and the like.

The following describes an RSRP reporting mode. FIG. 4 is a diagram of reporting an RSRP by a terminal. The RSRP reporting mode defined in the existing standard 3rd generation partnership project (3rd generation partnership project, 3GPP) 38.133 is differential reporting. To be specific, the communication device selects, as a reference RSRP (which may also be referred to as an RSRP label), a largest RSRP from an RSRP set that needs to be reported each time, and performs differential calculation on another RSRP in the RSRP set and the reference RSRP, to obtain a differentiated RSRP value. The differentiated RSRP value is referred to as an RSRP differential value, or may be referred to as an RSRP differential measurement value or an RSRP measurement value. The communication device that receives the RSRP set may determine, based on an identifier of a beam corresponding to each RSRP value, a beam to which the RSRP value belongs. For example, the identifier of the beam may be a CSI reference signal resource indicator (CSI-RS resource indicator, CRI). Table 1 is an example of an RSRP differential precision list. A corresponding RSRP report value in Table 1 is obtained based on the RSRP differential measurement value ($\Delta$RSRP), and the terminal reports the reference RSRP value and the RSRP report value. Optionally, when the differentiated RSRP value is out of a range of measurement values, the differentiated RSRP value may not be transmitted.

In this RSRP reporting mode, the reference RSRP is reported with high precision and occupies 7-bit overheads, and the differentiated RSRP is reported with low precision and occupies 4-bit overheads.

Table 1 RSRP differential precision list

| RSRP report value (report value) | Measurement value (difference between a differential RSRP and a largest RSRP) (measured quantity value, difference in measured RSRP from strongest RSRP) | Unit (dB) |
|---|---|---|
| DIFFRSRP_0 | $0 \geq \Delta RSRP > -2$ | dB |
| DIFFRSRP_1 | $-2 \geq \Delta RSRP > -4$ | dB |
| DIFFRSRP_2 | $-4 \geq \Delta RSRP > -6$ | dB |
| DIFFRSRP_3 | $-6 \geq \Delta RSRP > -8$ | dB |
| DIFFRSRP_4 | $-8 \geq \Delta RSRP > -10$ | dB |

(continued)

| RSRP report value (report value) | Measurement value (difference between a differential RSRP and a largest RSRP) (measured quantity value, difference in measured RSRP from strongest RSRP) | Unit (dB) |
|---|---|---|
| DIFFRSRP_5 | $-10 \geq \Delta RSRP > -12$ | dB |
| DIFFRSRP_6 | $-12 \geq \Delta RSRP > -14$ | dB |
| DIFFRSRP_7 | $-14 \geq \Delta RSRP > -16$ | dB |
| DIFFRSRP_8 | $-16 \geq \Delta RSRP > -18$ | dB |
| DIFFRSRP_9 | $-18 \geq \Delta RSRP > -20$ | dB |
| DIFFRSRP_10 | $-20 \geq \Delta RSRP > -22$ | dB |
| DIFFRSRP_11 | $-22 \geq \Delta RSRP > -24$ | dB |
| DIFFRSRP_12 | $-24 \geq \Delta RSRP > -26$ | dB |
| DIFFRSRP_13 | $-26 \geq \Delta RSRP > -28$ | dB |
| DIFFRSRP_14 | $-28 \geq \Delta RSRP > -30$ | dB |
| DIFFRSRP_15 | $-30 \geq \Delta RSRP$ | dB |

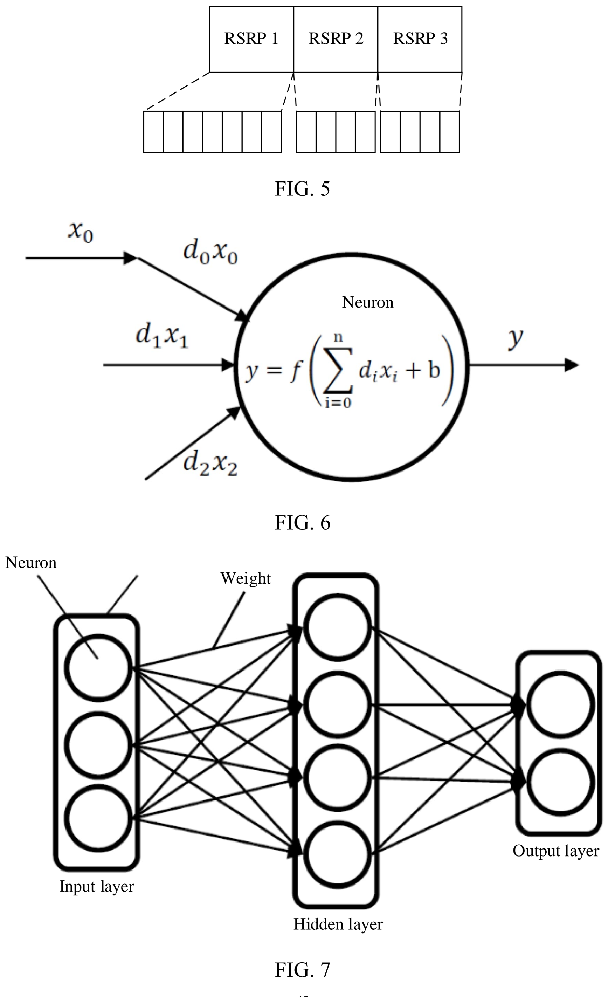

For example, the RSRP set that needs to be reported by the terminal includes an RSRP 1 to an RSRP 4, where the RSRP 1 to the RSRP 4 are -50 dBm, -70 dBm, -75 dBm, and -90 dBm in sequence. In this case, the RSRP 1 with a largest RSRP value is used as a reference RSRP. An RSRP 2 measurement value obtained by differentiating the RSRP 2 and the RARP 1 is -20, an RSRP 3 measurement value obtained by differentiating the RSRP 3 and the RARP 1 is -25, and an RSRP 4 measurement value obtained by differentiating the RSRP 4 and the RARP 1 is -40. Refer to Table 1. That an RSRP 2 report value is DIFFRSRP_9, an RSRP 3 report value is DIFFRSRP_12, and an RSRP 4 report value is DIFFRSRP_15 is obtained, where DIFFRSRP_15 may indicate that the RSRP report value is out of an RSRP differential precision range. FIG. 5 is a diagram of transmitting a packet of a plurality of RSRPs by a terminal. The terminal reports an RSRP 1 to an RSRP 3, where the reported RSRP 1 occupies 7 bits, and the RSRP 2 and the RSRP 3 each occupy 4 bits.

In the foregoing RSRP reporting mode, each time the terminal reports an RSRP set, the terminal needs to select, from the RSRP set, a reference RSRP that occupies 7-bit overheads. That is, if there are four RSRPs in the RSRP set, the 7-bit overheads need to be occupied to transmit a reference RSRP, $3 \times 4$ bits (each RSRP report value occupies 4 bits) are occupied to transmit other three RSRP report values, and a total of $7+3 \times 4=19$ bits are consumed.

3.2. Beam selection

In a plurality of beams obtained through sweeping, the terminal may determine, as working beams, transmit beams corresponding to a beam pair with largest RSRPs. The terminal and the base station may establish a beam pair in a direction of the beams, and perform subsequent communication by using the established beam pair. A process in which the terminal determines the working beams from the plurality of beams obtained through the beam sweeping may be referred to as the beam selection.

4. AI model

To reduce the overheads consumed by the beam sweeping, a beam management method using an artificial intelligence (artificial intelligence, AI) technology is further proposed in another related technology. Based on the artificial intelligence technology, a parameter of a beam at a future moment is predicted based on parameters of beams that have been obtained through the beam sweeping, to reduce the beam sweeping at the future moment.

The AI model is a type of mathematical algorithm model that uses a machine learning idea to resolve an actual problem. Data is input into the AI model based on a problem resolved by the AI model, to obtain a result output by the AI model for the resolved problem. Machine learning may be classified into supervised learning, unsupervised learning, reinforcement learning, and the like. A deep neural network (deep neural network, DNN) is a specific implementation form of machine learning. Based on network construction manners, the DNN may be classified into a feedforward neural network (feedforward neural network, FNN), a convolutional neural network (convolutional neural network, CNN), a recurrent neural network (recurrent neural network, RNN), and the like.

In terms of supervised learning, based on collected sample values and sample labels, a mapping relationship between the sample values and the sample labels is learned by using a machine learning algorithm, and the learned mapping relationship is expressed by using a machine learning model. A process of training the machine learning model is a process of learning the mapping relationship. For example, during signal detection, a received signal including noise is a sample, and a real constellation point corresponding to the signal is a label. Machine learning expects to learn a mapping relationship between the sample and the label through training, that is, enable the machine learning model to learn a signal detector. During training, a model parameter is optimized by calculating an error between a predicted value of a model and an actual label. Once the mapping relationship is learned, each new sample label can be predicted by using the learned mapping. The mapping relationship learned through supervised learning may include a linear mapping and a non-linear mapping. A learning task may be classified into a classification task and a regression task based on a type of a label.

In terms of unsupervised learning, an internal pattern of a sample is explored autonomously by using an algorithm based only on a collected sample value. For a specific type of algorithm of the unsupervised learning, a sample is used as a supervised signal. In other words, a model learns a mapping relationship between samples, which is referred to as self-supervised learning. During training, a model parameter is optimized by calculating an error between a predicted value of the model and the sample. The self-supervised learning may be used for signal compression and decompression restoration. Common algorithms include an autoencoder, a generative adversarial network, and the like.

Reinforcement learning is different from supervised learning, and is an algorithm that learns a policy of resolving problems by interacting with an environment. Different from the supervised learning and the unsupervised learning, reinforcement learning problems do not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. An objective of reinforcement learning is also to learn a mapping relationship between an environment status and an optimal decision action. However, a label of "correct action" cannot be obtained in advance. Therefore, a network cannot be optimized by calculating an error between an action and the "correct action". Reinforcement learning training is implemented through iterative interaction with the environment.

A deep neural network (deep neural network, DNN) is a specific implementation form of machine learning. According to a universal approximation theorem, the neural network can approximate any continuous function in theory, so that the neural network has a capability of learning any mapping. A conventional communication system needs to design a communication module with rich expert knowledge. However, a DNN-based deep learning communication system can automatically discover an implicit pattern structure from a large quantity of data sets, establish a mapping relationship between data, and obtain performance better than that of a conventional modeling method.

An idea of the DNN comes from a neuron structure of a brain tissue. Each neuron performs a weighted summation operation on input values of the neuron, and generates an output based on a weighted summation result by using a non-linear function. FIG. 6 is a diagram of a structure of a neuron. Specifically, it is assumed that an input of the neuron is $x = [x_0,...,x_n]$, a weight corresponding to the input is $d = [d_0,...,d_n]$, and a bias for weighted summation is $b$. Forms of the non-linear function may be diversified, and an example is a maximum-value function of $\max\{0, x\}$. In this case, execution effect of a neuron may be $\max\{0, \sum_{i=0}^{n} d_i x_i + b\}$. The DNN usually has a multi-layer structure. Each layer of the DNN may include a plurality of neurons. An input layer processes a received value by using a neuron, and then transfers a processed value to an intermediate hidden layer. Similarly, the hidden layer transfers a calculation result to a final output layer, to generate a final output of the DNN. FIG. 7 is a diagram of a layer relationship in a neural network.

The DNN usually has more than one hidden layer, and the hidden layer usually directly affects an information extraction capability and a function fitting capability. Increasing a quantity of hidden layers of the DNN or increasing a width of each layer can improve the function fitting capability of the DNN. A weight in each neuron is a parameter of a DNN network model. The model parameter is optimized in a training process, so that the DNN network has a data feature extraction capability and a mapping relationship expression capability. The DNN usually optimizes the model parameter according to a supervised learning or unsupervised learning strategy.

Based on network construction manners, the DNN may be classified into a feedforward neural network (Feedforward Neural Network, FNN), a convolutional neural network (Convolutional Neural Network, CNN), and a recursive neural network (Recurrent Neural Network, RNN). FIG. 7 shows an FNN network, and the FNN network is characterized in that neurons at adjacent layers are completely connected. Consequently, the FNN usually requires a large amount of storage space, resulting in high calculation complexity.

The CNN is a neural network dedicated to processing data of a similar grid structure. For example, both time series data (timeline discrete sampling) and image data (two-dimensional discrete sampling) may be considered as the data of the similar grid structure. The CNN performs a convolution operation by capturing partial information through a window with a fixed size, instead of performing an operation by using all input information at one time. This greatly reduces a calculation amount of a model parameter. In addition, based on different types of information captured through the window (for example, a person and an object in a same image are information of different types), different convolution kernel operations may be used for each window, so that the CNN can better extract a feature of input data.

The RNN is a DNN network using feedback time series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

The foregoing FNN, CNN, and RNN are common neural network structures, and these network structures are constructed based on neurons. As described above, each neuron performs the weighted summation operation on the input values of the neuron, and outputs the weighted summation result by using the non-linear function. In this case, a weight of the weighted summation operation of the neuron in the neural network and the non-linear function are referred to as parameters of the neural network. A neuron using a non-linear function $\max\{0, x\}$ is used as an example. Parameters of the neuron that performs a $\max\{0, \sum_{i=0}^{n} d_i x_i + b\}$ operation are a weight $d = [d_0,...,d_n]$, a weighted summation bias $b$, and the non-linear function $\max\{O, x\}$. Parameters of all neurons in a neural network form parameters of the neural network.

5. AI-based beam prediction

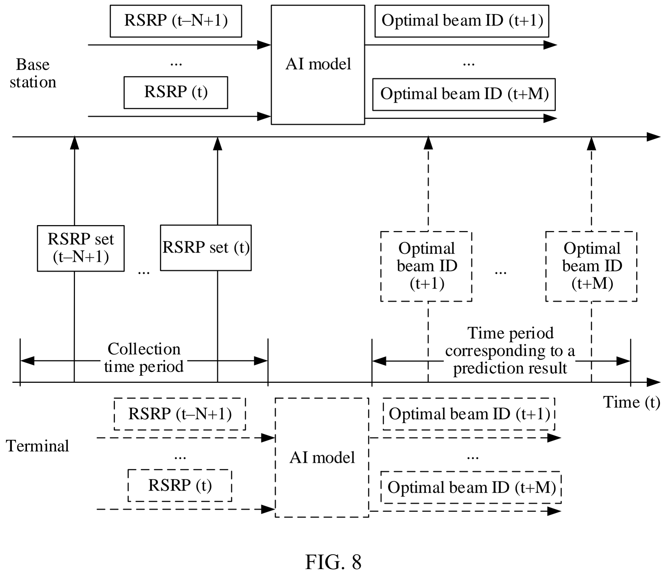

FIG. 8 is a schematic flowchart of AI-based beam prediction. When moving at a specific speed along a specific trajectory, the terminal performs beam sweeping at one or more sampling points (for example, a location of the terminal) on the trajectory. A plurality of RSRP values may be obtained through each time of beam sweeping, and all RSRP values or a part of RSRP values in the plurality of RSRP values may form an RSRP set. The terminal or the base station performs prediction by using the AI model based on the RSRP set obtained through the beam sweeping, to predict an optimal beam of the terminal at the sampling point on the trajectory at a future moment. The foregoing beam prediction is referred to as the AI-based beam prediction.

Particularly, when AI-based time-domain beam management is used, the terminal needs to continuously report RSRP sets a plurality of times. A reporting mode of differentially reporting RSRPs in the related technology is used, and reporting overheads are fixed each time the RSRP set is reported.

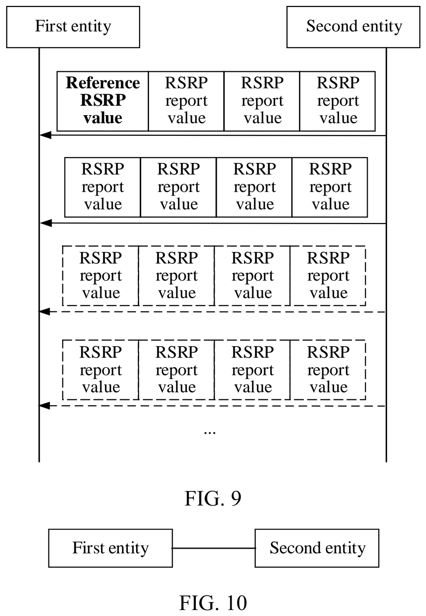

Based on this, an embodiment of this application provides a data transmission method. A second entity performs a differential operation on an RSRP value in an RSRP set and a previously reported reference RSRP value, to obtain an RSRP differential measurement value set. The second entity reports the RSRP differential measurement value set, to reduce overheads occupied for reporting the RSRP value. Refer to FIG. 9. When reporting an RSRP set to a first entity, the second entity only needs to report a reference RSRP value during a first time of reporting, and does not need to select a reference RSRP value each time an RSRP set is reported after the first time. This reduces overheads occupied by the reference RSRP value compared with an RSRP differential measurement value, this is, reduces overheads consumed in a beam training procedure. For example, as shown in FIG. 9, a reference RSRP value and three RSRP report values are reported for the first time, and four RSRP report values are reported for a second time, a third time, a fourth time, and the like when RSRP values are subsequently reported. The subsequently reported RSRP report value is obtained by performing differential calculation based on the RSRP values reported for the first time and the RSRP values that need to be reported each time subsequently.

An RSRP differential measurement value set is a set of RSRP differential measurement values obtained by differentiating the RSRP values in the RSRP set and the reference RSRP value.

The following describes technical solutions in embodiments of this application with reference to the accompanying drawings in embodiments of this application. In the descriptions of this application, unless otherwise specified, "/" indicates an "or" relationship between associated objects. For example, A/B may indicate A or B. "And/or" in this application describes only an association relationship between associated objects, and indicates that three relationships may exist. For example, A and/or B may indicate the following three cases: Only A exists, both A and B exist, and only B exists. A and B may be singular or plural. In addition, in the descriptions of this application, "a plurality of" refers to two or more than two unless otherwise specified. "At least one of the following items (pieces)" or a similar expression thereof means any combination of these items, including a singular item (piece) or any combination of plural items (pieces). For example, at least one (piece) of a, b, or c may indicate a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

The technical solutions in embodiments of this application may be applied to a 5th generation (5th generation, 5G) system or referred to as a new radio (new radio, NR) system. The technical solutions in embodiments of this application may also be applied to another communication system, for example, an evolved system of an NR system, an LTE system, an LTE frequency division duplex (frequency division duplex, FDD) system, an LTE time division duplex (time division duplex, TDD) system, a universal mobile telecommunications system (universal mobile telecommunications system, UMTS), or a worldwide interoperability for microwave access (worldwide interoperability for microwave access, WiMAX) communication system. The 5G system in this application includes a non-standalone (non-standalone, NSA) NR system or a standalone (standalone, SA) NR system. The technical solutions provided in this application may be further applied to a future communication system, for example, a sixth generation mobile communication system. The communication system may alternatively be a public land mobile network (public land mobile network, PLMN), a D2D communication system, a machine-to-machine (machine-to-machine, M2M) communication system, an Internet of Things (Internet of Things, IoT) communication system, or another communication system.

FIG. 10 is a diagram of an architecture of a communication system corresponding to a data transmission method according to an embodiment of this application. Refer to FIG. 10. Provided that a first entity and a second entity exist in the communication system to which this embodiment of this application is applied, the first entity and the second entity can send data to each other. The entity may be a device, a module, an apparatus, or the like, for example, a communication device. The communication device may include a network device, a terminal device, and the like.

The network device is an entity that is on a network side and that is configured to: transmit or receive a signal. The network device may be a network unit, for example, a base station (base station, BS), may be an apparatus in the network unit, for example, a chip (system) or another component or assembly in the base station, or may be a device including the network device. This is not limited in this application. The network device may include a sending module, a receiving module, a processing module, a storage module, and the like. The network side may have an AI module, for example, a processing module that is based on a neural network model. The network device may obtain a processing result of the AI module. The AI module may be disposed in the network device, or may be disposed separately from the network device. This is not specifically limited in embodiments of this application.

The terminal device may also be referred to as user equipment (user equipment, UE), is briefly referred to as a terminal, and is an entity that is on a user side and that is configured to: transmit or receive a signal, for example, a mobile phone or a vehicle-mounted device. The terminal device may include a sending module, a receiving module, a processing module, a storage module, and the like. The user side may have an AI module, for example, a processing module that is based on a neural network model. The terminal device may obtain a processing result based on the AI module. The AI module may be disposed in the terminal device, or may be disposed separately from the terminal device. This is not specifically limited in embodiments of this application.

The processing module that is based on the neural network model may implement functions such as beamforming, feature extraction, feature analysis, and channel modeling that are based on the neural network model.

The first entity and the second entity may send data through a physical channel. The physical channel may be a physical downlink control channel (PDCCH), a physical downlink shared channel (PDSCH), a physical uplink shared channel (PUSCH), a physical uplink control channel (PUCCH), a physical sidelink control channel (PSCCH), a physical sidelink shared channel (PSSCH), or the like.

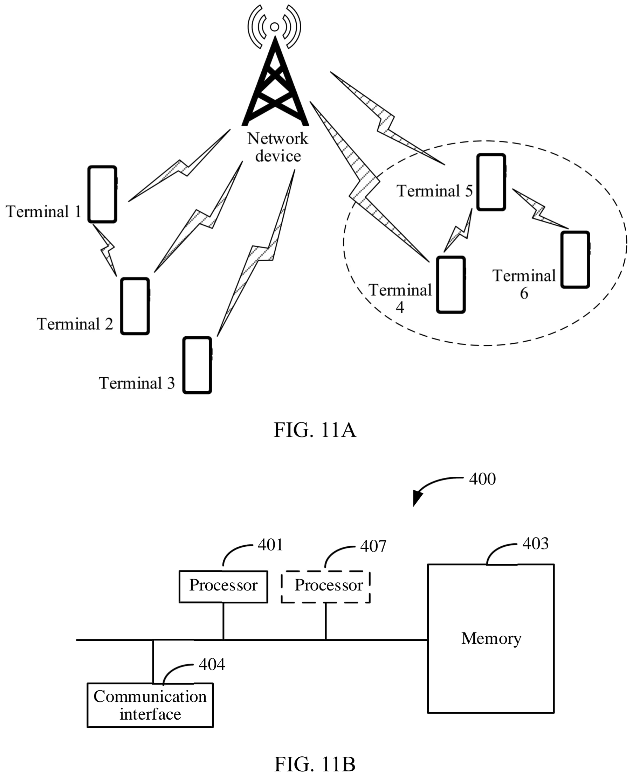

For example, refer to FIG. 11A. A communication system includes one first entity and six second entities. The first entity is a network device, and the second entity is a terminal. The terminals are a terminal 1 to a terminal 6 respectively. In the system, the terminal may send uplink data to the network device, and the network device receives the uplink data from the terminal. The network device may send configuration information to the terminal, and configure a parameter of the terminal by using configuration information.

For another example, refer to FIG. 11A. The terminal 4 to the terminal 6 may also form a communication system. In this case, both a first entity and second entities are terminals. In the system including the terminal 4 to the terminal 6, the terminal 5 is the first entity, and the terminal 4 and the terminal 6 are the second entities. The terminal 4 and the terminal 6 send data to the terminal 5, and the terminal 5 receives the data sent by the terminal 4 and the terminal 6. For example, in an internet of vehicles system, the terminal 5 may be a central controller of a vehicle, the terminal 4 may be a display, and the terminal 6 may be a Bluetooth speaker.

The terminal or the network device in embodiments of this application may be implemented by a communication device having a structure described in FIG. 11B. FIG. 11B is a diagram of a hardware structure of a communication device according to an embodiment of this application. The communication device 400 includes at least one processor 401, a memory 403, and at least one communication interface 404. The memory 403 may alternatively be included in the processor 401.

The processor 401 may include one or more processing units. The processing unit may be a central processing unit (central processing unit, CPU), an application-specific integrated circuit (application-specific integrated circuit, ASIC), or one or more integrated circuits configured to control program execution of the solutions of this application.

A communication line exists between the foregoing components, and is configured to transmit information between the components.

The communication interface 404 is configured to communicate with another device. In this embodiment of this application, the communication interface may be a module, a circuit, an interface, or another apparatus that can implement a communication function, and is configured to communicate with another device. Optionally, the communication interface may be a transmitter that is independently disposed, and the transmitter may be configured to send information to the another device; or the communication interface may be a receiver that is independently disposed, and is configured to receive information from the another device. Alternatively, the communication interface may be a component integrating functions of sending and receiving information. A specific implementation of the communication interface is not limited in embodiments of this application.

The memory 403 may be a read-only memory (read-only memory, ROM) or another type of storage module that can store static information and instructions, a random access memory (random access memory, RAM) or another type of storage module that can dynamically store information and instructions, or may be an electrically erasable programmable read-only memory (electrically erasable programmable read-only memory, EEPROM), an optical disc, a magnetic disk, or another magnetic storage device. The memory may independently exist and may be connected to the processor through a communication line. The memory may alternatively be integrated with the processor.

The memory 403 is configured to store computer-executable instructions. The computer-executable instructions may be invoked by one or more processing units in the processor 401 to perform corresponding steps in methods provided in the following embodiments.

Optionally, the computer-executable instructions in this embodiment of this application may also be referred to as application program code, instructions, a computer program, or another name. This is not specifically limited in embodiments of this application.

During specific implementation, in an embodiment, the communication device 400 may include a plurality of processors, for example, the processor 401 and a processor 407 in FIG. 11B. Each of the processors may be a single-core processor or a multi-core processor. The processor herein may be one or more devices, circuits, and/or processing cores configured to process data (for example, computer program instructions).

FIG. 11B is an example diagram of the structure of the communication device. It should be understood that the communication device shown in the figure is merely an example, and during actual application, the communication device may have more or fewer components than those shown in FIG. 11B, may combine two or more components, or may have different component configurations.

The communication device 400 may be a general-purpose device or a dedicated device. A type of the communication device 400 is not limited in embodiments of this application. The terminal may be a device having a structure similar to that in FIG. 11B.

With reference to the accompanying drawings, the following describes the data transmission method in embodiments of this application by using an example in which the first entity is a base station, the second entity is a terminal, and the first entity interacts with the second entity.

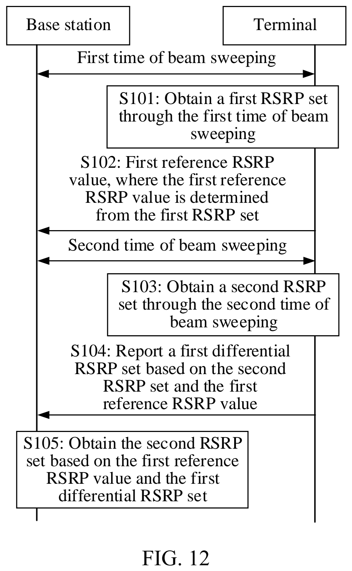

An embodiment of this application provides a data transmission method. FIG. 12 is a schematic flowchart according to this embodiment of this application. The method includes the following steps.

S101: A terminal obtains a first RSRP set through a first time of beam sweeping.

The first time of beam sweeping is performed between a base station and the terminal, and the base station may obtain, based on a beam sweeping result, RSRP values corresponding to one or more beam pairs. The terminal may screen, in a preset screening manner, the RSRP values corresponding to the one or more beam pairs, to obtain the first RSRP set.

For example, the terminal may form the first RSRP set by using all RSRP values obtained through the current time of beam sweeping.

For another example, the terminal may form the first RSRP set by using M largest RSRP values in the RSRP values obtained through the current time of beam sweeping, where M is a positive integer.

For another example, the terminal may form the first RSRP set by using RSRP values that meet a preset condition and that are obtained through the current time of beam sweeping. The preset condition may be that the RSRP value is greater than a preset RSRP value, the RSRP value is greater than or equal to the preset RSRP value, or the like. For example, the preset condition is that the RSRP value is greater than the preset RSRP value, the preset RSRP value is -50 dB, and the RSRP values obtained by the terminal through the current time of beam sweeping includes {-10 dB, -10 dB, -30 dB, -40 dB, -50 dB, -60 dB, -70 dB, -80 dB}. If four RSRP values meet the preset condition, the first RSRP set includes {-10 dB, -10 dB, -30 dB, -40 dB}.

S102: The terminal reports a first reference RSRP value, where the first reference RSRP value is determined from the first RSRP set. Correspondingly, the base station receives the first reference RSRP value from the terminal.

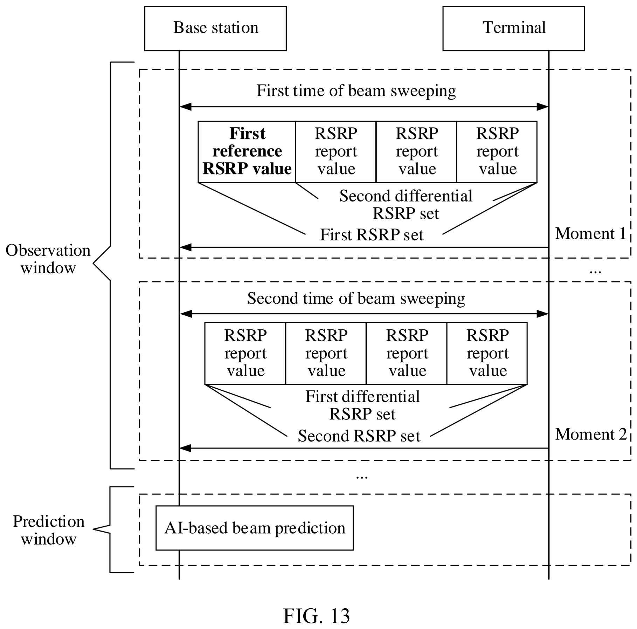

FIG. 13 is another schematic flowchart according to an embodiment of this application.

The terminal may determine the first reference RSRP value from the first RSRP set, and report (report) the first reference RSRP value to the base station. The base station receives the first reference RSRP value.

In embodiments of this application, determining may also be described as choosing and selecting. For example, the terminal selects the first reference RSRP value from the first RSRP set.

In embodiments of this application, reporting may also be described as sending, transmitting, reporting, or the like. The reporting in embodiments of this application indicates that an entity sends information to another entity, where the information may be a reference RSRP value, an RSRP set, or the like. The reporting may not be understood as sending information only through an uplink channel. A channel selected for the reporting is not limited in embodiments of this application.

Optionally, determining the first reference RSRP value by the terminal may be implemented as: using a smallest RSRP value in the first RSRP set as the first reference RSRP value, or using a largest RSRP value in the first RSRP set as the first reference RSRP value. Alternatively, the RSRP values in the first RSRP set are sorted, and an RSRP value whose value is a median is used as the first reference RSRP value.

For example, the first RSRP set is {-10 dB, -10 dB, -30 dB, -40 dB}. The terminal may select a smallest RSRP value, and use -40 dB as the first reference RSRP value; may use a largest RSRP value of -10 dB as the first reference RSRP value; or use an RSRP value of -30 dB whose value is a median as the first reference RSRP value.

S103: The terminal obtains a second RSRP set through a second time of beam sweeping.

Similarly, the beam sweeping is performed again between the terminal and the base station, and the second RSRP set is obtained based on a result of the second time of beam sweeping. For a manner of obtaining the second RSRP set, refer to the manner of obtaining the first RSRP set. Details are not described herein again.

For example, the second RSRP set obtained through the second time of beam sweeping between the terminal and the base station is {-20 dB, -10 dB, -30 dB, -35 dB}.

S104: The terminal reports a first differential RSRP set based on the second RSRP set and the first reference RSRP value, where the first differential RSRP set is obtained by performing differential calculation on an RSRP value in the second RSRP set and the first reference RSRP value. Correspondingly, the base station receives the first differential RSRP set.

After obtaining the second RSRP set, the terminal performs a differential operation on the RSRP values in the second RSRP set and the first reference RSRP value, to obtain the first differential RSRP set. The terminal reports the first differential RSRP set to the base station, so that the base station obtains, based on the first differential RSRP set, beam information in the second time of beam sweeping between the terminal and the base station.

For example, the first reference RSRP value is -10 dB. A differential operation is performed on the second RSRP set {-20 dB, -10 dB, -30 dB, -35 dB} and the first reference RSRP value, to obtain measurement values {-10 dB, 0, -20 dB, -25 dB}. The terminal may obtain RSRP report values {DIFFRSRP_5, DIFFRSRP_0, DIFFRSRP_10 and DIFFRSRP_12} based on the measurement values with reference to the foregoing Table 1, where the RSRP report values form the first differential RSRP set.

In Table 1, 16 RSRP report values with different values are set preferentially when the measurement value ranges from 0 to -30. In binary, the 16 RSRP report values may be represented by using 16 different four-digit numbers, and each RSRP value occupies overheads of four bits. For example, {DIFFRSRP_5, DIFFRSRP_0, DIFFRSRP_10, DIFFRSRP_12} are represented as {0101, 0000, 1010, 1100}.

The reference RSRP value is an RSRP value that is not processed through calculation like differential calculation, and a bandwidth occupied by the reference RSRP value is 7 bits. The terminal sends, to the base station, the second RSRP set that does not include the reference RSRP value, to reduce overheads (three bits in this embodiment of this application) occupied by the reference RSRP value compared with the RSRP report value, and save space resources.

In some other embodiments, correspondences between different measurement values and different RSRP report values may be further set, so that the RSRP report values occupy less bandwidths. For example, Table 2 is another example of an RSRP differential precision list. Report values are set to DIFFRSRP_0 to DIFFRSRP_8, and the terminal uses an RSRP value with energy of -30 dB as a reference RSRP value. A differential operation is performed on the second RSRP set {-20 dB, -10 dB, -30 dB, -35 dB} and the first reference RSRP value, to obtain measurement values {10 dB, 20 dB, 0, -5 dB}. Refer to Table 2. RSRP report values are obtained as {DIFFRSRP_2, DIFFRSRP_0, DIFFRSRP_5 and DIFFRSRP_6}. The foregoing nine RSRP report values may be represented by using three-digit binary numbers, so that RSRP report values actually sent by the terminal are obtained as {010, 000, 101, 110}. The RSRP differential precision list shown in Table 2 is used, so that each RSRP report value in the second RSRP set occupies only three bits, the second RSRP set sent by the terminal occupies less overheads.

Table 2 RSRP differential precision list 2

| RSRP report value | Measurement value (difference between a differential RSRP and a reference RSRP) | Unit (dB) |
|---|---|---|
| DIFFRSRP_0 | 20≥ΔRSRP>16 | dB |
| DIFFRSRP_1 | 16≥ΔRSRP>12 | dB |
| DIFFRSRP_2 | 12≥ΔRSRP>8 | dB |
| DIFFRSRP_3 | 8≥ΔRSRP>4 | dB |
| DIFFRSRP_4 | 4≥ΔRSRP>0 | dB |
| DIFFRSRP_5 | 0≥ΔRSRP>-4 | dB |
| DIFFRSRP_6 | -4≥ΔRSRP>-8 | dB |
| DIFFRSRP_7 | -8≥ΔRSRP>-12 | dB |

S105: The base station obtains the second RSRP set based on the first reference RSRP value and the first differential RSRP set. The base station may perform inverse differential calculation on an RSRP value in the first differential RSRP set and the first reference RSRP value, to obtain the second RSRP set.

The RSRP value is reported between the terminal and the base station according to a rule of an RSRP differential measurement value and an RSRP report value shown in the RSRP differential precision list in Table 1. After receiving the first differential RSRP set, the base station may obtain RSRP differential measurement values based on Table 1, and perform inverse differential calculation on the measurement values and the first reference RSRP value reported by the terminal in S102, to obtain the second RSRP set.

For example, the first reference RSRP value received by the base station is -10 dB, and the first differential RSRP set is {0101, 0000, 1010, 1100}. Report values corresponding to {0101, 0000, 1010, 1100} are {DIFFRSRP_5, DIFFRSRP_0, DIFFRSRP_10, DIFFRSRP_12}. Based on Table 1, the base station obtains RSRP differential measurement values {-10 dB, 0, -20 dB, -25 dB}, and the base station separately performs an inverse differential operation on each measurement value and the first reference RSRP value, to obtain a second RSRP set {-20 dB, -10 dB, -30 dB, -35 dB}.

In the foregoing manner, when sending the RSRP value set to the base station for the second time, the terminal may not need to send the reference RSRP value, so that the sent RSRP set occupies less overheads, and a waste of space resources is reduced.

The foregoing describes the data transmission method in this embodiment of this application by using an example in which the terminal sends the RSRP values to the base station twice (the reference RSRP value is sent for the first time, and the first differential RSRP set is sent for the second time). It may be understood that, in this embodiment of this application, the terminal may send RSRP values to the base station for more times, for example, three times, four times, 10 times, or 20 times. A differential operation may be performed between RSRP values sent by the terminal to the base station for a plurality of times and the reference RSRP value sent for the first time, so that the RSRP values sent by the terminal each time consume less overheads, thereby saving space resources.

In this embodiment of this application, a sequence of steps S102 and S103 is not limited. For example, S103 may be performed before S102, may be performed after S102, or S103 and S102 are simultaneously performed.

In some embodiments, after receiving RSRP values sent by the terminal, the base station may input the RSRP values into the AI model. The AI model may output predicted RSRP values or beam information, and predict a beam at a future moment based on the RSRP values.

For example, the AI model may output the RSRP values and identifiers of beams corresponding to the RSRP values. The base station may select, as a beam based on the preset condition from the beams output by the AI model, the beam that meets the condition, for subsequent communication with the terminal. For example, an identifier of the beam may be identity information (identify, ID) of the beam.

For another example, the AI model may output an identifier of a beam, and the base station may directly use the beam as a beam for subsequent communication with the terminal.

In some embodiments, the terminal runs along a specific trajectory, and the RSRP values sent by the terminal to the base station are RSRP values obtained by performing beam sweeping with the base station when the terminal runs along the trajectory. The base station may obtain, through prediction based on the RSRP values, an RSRP value obtained by the terminal through sweeping at a future moment when the terminal runs along the trajectory, or a beam having the RSRP value.

Refer to FIG. 13. In this embodiment of this application, the terminal further includes reporting a second differential RSRP set. The second differential RSRP set is obtained by performing differential calculation on an RSRP value other than the first reference RSRP value in the first RSRP set and the first reference RSRP value. Correspondingly, the base station receives the second differential RSRP set.

For example, the first RSRP set includes {-10 dB, -10 dB, -30 dB, -40 dB}, and the first reference RSRP value is -10 dB. The terminal may separately perform a differential operation on {-10 dB, -30 dB, -40 dB} and -30 dB, to obtain RSRP differential measurement values {0, -20 dB, -30 dB}. Refer to Table 1. RSRP report values {DIFFRSRP_0, DIFFRSRP_10, DIFFRSRP_15} are obtained based on the RSRP differential measurement values.

The terminal reports the first reference RSRP value and the second differential RSRP set to the base station. After receiving the first reference RSRP value and the second differential RSRP set, the base station may obtain an RSRP differential measurement value of the second differential RSRP set based on Table 1, and perform inverse differential calculation on the measurement value and the first reference RSRP value, to obtain the first RSRP set. For a specific example in which the terminal obtains the first RSRP set based on Table 1, refer to the example in which the terminal obtains the second RSRP set. Details are not described herein again.

In this embodiment of this application, when the base station receives RSRP sets (the first RSRP set and the second RSRP set as examples above, and a plurality of RSRP sets such as a third RSRP set that may be further included) sent by the terminal for more than two times, only one RSRP value in the plurality of RSRP sets is a reference RSRP value, and remaining RSRP values are all in a form obtained by performing a differential operation with the reference RSRP value. When the terminal sends the RSRP sets, overheads occupied by the RSRP are reduced, and overhead resources are saved.

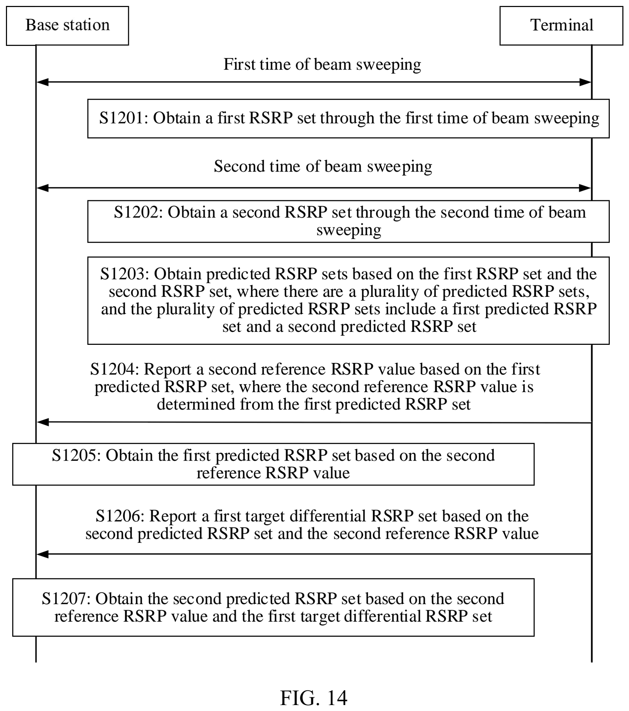

FIG. 14 is another schematic flowchart according to an embodiment of this application. FIG. 14 shows a data transmission method according to another embodiment of this application. The method includes the following steps.

S1201: A terminal obtains a first RSRP set through a first time of beam sweeping.

S1202: The terminal obtains a second RSRP set through a second time of beam sweeping.

S1203: The terminal obtains predicted RSRP sets based on the first RSRP set and the second RSRP set. There are a plurality of predicted RSRP sets, and the plurality of predicted RSRP sets include a first predicted RSRP set and a second predicted RSRP set.

In some embodiments, each predicted RSRP set obtained by the terminal through prediction may be an RSRP set obtained by the terminal through beam sweeping with a base station at a future moment. There may be a time relationship between the plurality of predicted RSRP sets. For example, a future moment corresponding to the first predicted RSRP set is before a future moment corresponding to the second predicted RSRP set.

The terminal predicts RSRP values at the future moments based on the RSRP sets obtained through the first time of beam sweeping and the second time of beam sweeping, and reports the predicted RSRP values to the base station. The base station receives the RSRP values at the future moments. The base station may select, in advance based on the RSRP values at the future moments, a beam for communication with the terminal. At the future moments, the terminal may directly communicate with the base station by using the beam, to reduce time consumed by the terminal in beam selection, and improve a running speed of the terminal. In addition, an input amount of the AI model is usually greater than an output amount of the AI model. Overheads consumed by the terminal to send the predicted RSRP values to the base station are less than overheads consumed by the terminal to send, to the base station, the RSRP values that need to be input into the AI model. Therefore, in this embodiment of this application, the AI model is disposed on the terminal, so that fewer overheads can be consumed, and overhead resources can be saved.

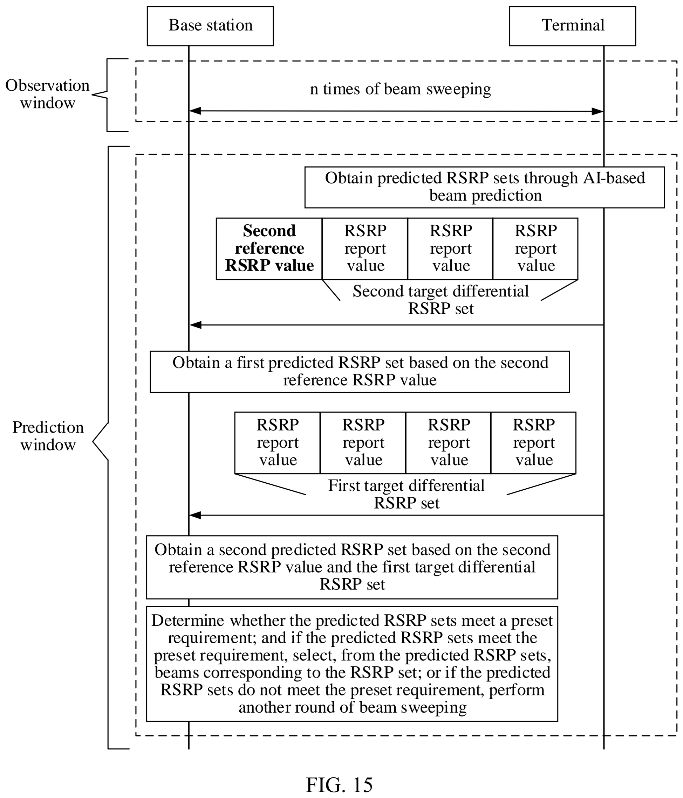

Refer to FIG. 15. In some embodiments, the terminal obtains predicted RSRP sets through AI-based beam prediction. An AI model used in the AI-based beam prediction may be disposed on the terminal or another device communicatively connected to the terminal.

Refer to FIG. 15. In some embodiments, the terminal may obtain W RSRP sets through n times of beam sweeping, and obtain predicted RSRP sets based on the W RSRP sets. A quantity n of beam sweeping times may be 2 or more in the foregoing example. For example, n may be a positive integer greater than or equal to 3. It should be noted that a quantity W of predicted RSRP sets obtained through the AI-based beam prediction may be equal to a quantity of times of beam sweeping, or may be different from the quantity of times of beam sweeping. Values of n and W may be selected based on a configuration of the AI model. This is not limited in embodiments of this application.

In some other embodiments, the RSRP sets obtained by the terminal through prediction further includes a third predicted RSRP set, a fourth predicted RSRP set, and the like. The terminal may set a quantity of predicted RSRP sets based on a requirement.

S1204: The terminal reports a second reference RSRP value based on the first predicted RSRP set, where the second reference RSRP value is determined from the first predicted RSRP set.

Correspondingly, the base station receives the second reference RSRP value.

With reference to the manner of determining the first reference RSRP value from the first RSRP set in the foregoing embodiment, the second reference RSRP value may also be determined from the first predicted RSRP set in the foregoing manner. For example, a largest RSRP value in the first predicted RSRP set is selected as a reference RSRP value, a manner of selecting the reference RSRP value is not described herein again.

S1205: The base station obtains the first predicted RSRP set based on the second reference RSRP value.

In this embodiment of this application, the first predicted RSRP set includes the second reference RSRP value. The second reference RSRP value received by the base station is all RSRP values in the first predicted RSRP set.

S1206: The terminal reports a first target differential RSRP set based on the second predicted RSRP set and the second reference RSRP value. The first target differential RSRP set is obtained by performing differential calculation on an RSRP value in the second predicted RSRP set and the second reference RSRP value.

Correspondingly, the base station receives the first target differential RSRP set.

S1207: The base station obtains the second predicted RSRP set based on the second reference RSRP value and the first target differential RSRP set.

The base station may perform inverse differential calculation on an RSRP value in the first target differential RSRP set and the second reference RSRP value, to obtain the second predicted RSRP set.

According to the foregoing method in this embodiment of this application, after obtaining the first predicted RSRP set, the base station may determine whether an RSRP value in the first predicted RSRP set meets a preset requirement. If there is the RSRP value that meets the preset requirement in the first predicted RSRP set, the base station may communicate with the terminal at a future moment by using a beam corresponding to the RSRP value. Alternatively, after obtaining the plurality of predicted RSRP sets (for example, the first predicted RSRP set and the second predicted RSRP set), the base station may determine whether an RSRP value in the plurality of predicted RSRP sets meets the preset requirement. If there is the RSRP value that meets the preset requirement in the plurality of predicted RSRP sets, the base station may communicate with the terminal at a future moment by using a beam corresponding to the RSRP value.

If the base station learns, by determining whether the RSRP value in the plurality of predicted RSRP sets meets the preset requirement, that there is no RSRP value that meets the preset requirement in the predicted RSRP sets, the base station may perform a plurality of rounds of beam sweeping with the terminal, the terminal reports, to the base station by using the method in this embodiment of this application, an RSRP value obtained through re-prediction, and the base station determines a predicted RSRP set again. Each time the terminal reports the RSRP value to the base station by using the method in this embodiment of this application, fewer overheads are consumed than those in a method of reporting an RSRP value in the related technology, so that overhead resources can be saved.

Alternatively, when the base station learns, by determining whether the RSRP value in the plurality of predicted RSRP sets meets the preset requirement, that there is no RSRP value that meets the preset requirement in the predicted RSRP sets, the base station may select a beam with best quality from the predicted RSRP sets, and communicate with the terminal at a future moment by using the beam.

For example, the preset requirement may be that the RSRP value is greater than a first threshold. The first threshold may be preset in the base station, or may be obtained by the base station based on a specific instruction. This is not specifically limited in embodiments of this application.

When there are a plurality of RSRP values that meet the preset requirement in the predicted RSRP sets, the base station may select, based on a preset filter condition from beams corresponding to the plurality of RSRP values, a beam for communication with the terminal. For example, the preset filter condition may be random selection, selection of a largest RSRP value, or the like. The base station may alternatively select, with reference to another attribute of a beam, a beam used to communicate with the terminal.

For example, the base station may select a beam based on RSRP values of beams, and use a beam with a largest RSRP value as a beam with best quality.

Refer to FIG. 15. In this embodiment of this application, the first predicted RSRP set may include at least two RSRP values, and S1204 further includes: The terminal reports a second target differential RSRP set based on the first predicted RSRP set. The second target differential RSRP set is obtained by performing differential calculation on an RSRP value other than the second reference RSRP value in the first predicted RSRP set and the second reference RSRP value.

Correspondingly, the base station receives the second target differential RSRP set.

The terminal reports the second reference RSRP value and the second target differential RSRP set to the base station. After receiving the second reference RSRP value and the second target differential RSRP set, the base station may obtain an RSRP differential measurement value of the second target differential RSRP set based on Table 1, and perform inverse differential calculation on the measurement value and the second reference RSRP value, to obtain the first predicted RSRP set.

The foregoing content describes the data transmission method in this embodiment of this application by using an example in which the beam sweeping is performed between the base station and the terminal, and the terminal reports the RSRP sets to the base station in an AI model-based beam prediction scenario.

The data transmission method in this embodiment of this application may be further applied to an AI model monitoring process. In the model monitoring process, the terminal may sweep all beams sent by the base station, and compare, with an optimal beam obtained by the base station from beams swept at a plurality of moments, a prediction result output through AI. If AI performance does not meet a requirement, an AI model may be retrained or updated. The optimal beam is a beam with best performance in the beams swept by the terminal. It may also be understood as that performance of the optimal beam is a performance upper limit of a beam obtained by the terminal through the sweeping.

For example, the optimal beam may be a beam with a largest RSRP value.

In the model monitoring process, the terminal sweeps all the beams sent by the base station, and reports results of sweeping all the beams. In this case, in a process in which the terminal reports RSRP values of the beams, the terminal may select a largest RSRP of a beam at a first moment as a high-precision label, and perform, at all subsequent moments based on the largest high-precision RSRP, differentiation on RSRPs corresponding to all the beams including an observation window and a prediction window in the foregoing example, for reporting with low precision. For example, the RSRP report values corresponding to Table 1 are used for reporting, and bit overheads occupied for reporting the RSRP values that can be saved in this solution are (X-1)*3 bits. X is a quantity of times that the terminal reports an RSRP value of a beam to the base station.

In this embodiment, any method in embodiments is used in combination or independently. A combination of any method in embodiments is not limited thereto, and methods formed by various combinations all fall within the protection scope of embodiments of this application.

It should be noted that the foregoing plurality of embodiments may be combined, and a combined solution is implemented. Optionally, some operations in procedures of the foregoing method embodiments are randomly combined, and/or a sequence of some operations is randomly changed. In addition, an execution sequence between steps in each procedure is merely an example, and does not constitute a limitation on an execution sequence between the steps. The steps may alternatively be performed in another execution sequence. It is not intended to indicate that the execution sequence is an only sequence in which these operations may be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the foregoing method embodiments may be implemented separately or in combination.

It may be understood that, to implement the foregoing functions, the device in embodiments of this application includes a corresponding hardware structure and/or software module for performing each function. With reference to the units and algorithm steps described in embodiments disclosed in this application, embodiments of this application can be implemented in a form of hardware or hardware and computer software. Whether a function is performed in a manner of hardware or hardware driven by computer software depends on specific applications and design constraint conditions of the technical solutions. A person skilled in the art may use different methods to implement the described functions for each particular application, but it should not be considered that the implementation falls beyond the scope of the technical solutions in embodiments of this application.

In embodiments of this application, the communication device may be divided into functional units based on the foregoing method example. For example, each functional unit may be obtained through division based on each corresponding function, or two or more functions may be integrated into one processing unit. The integrated unit may be implemented in a form of hardware, or may be implemented in a form of a software functional unit. It should be noted that, in embodiments of this application, division into the units is an example, and is merely logical function division. During actual implementation, another division manner may be used.

Another embodiment of this application provides an apparatus. The apparatus may be the foregoing first entity, the foregoing second entity, or a corresponding component. The apparatus may include a memory and one or more processors. The memory is coupled to the processor. The memory is configured to store computer program code. The computer program code includes computer instructions. When the processor executes computer instructions, a device may perform functions or steps performed by the first entity or the second entity in the foregoing method embodiments. For a structure of the device, refer to the structure of the device shown in FIG. 11B.

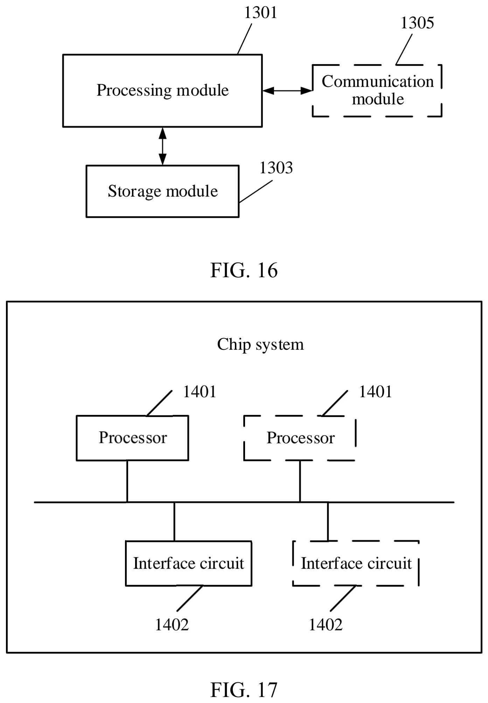

A core structure of the device may be represented as a structure shown in FIG. 16. The device includes a processing module 1301 and a storage module 1303.

The processing module 1301 may include at least one of a central processing unit (CPU), an application processor (Application Processor, AP), or a communication processor (Communication Processor, CP). The processing module 1301 may perform an operation or data processing related to control and/or communication of at least one of other elements of a communication device of a user.

The storage module 1303 may include a volatile memory and/or a nonvolatile memory. The storage module is configured to store instructions or data related to at least one of other modules of a storage device.

Optionally, the apparatus further includes a communication module 1305, configured to support the device in communicating with another device (via a communication network). For example, the communication module may be connected to the network through wireless communication or wired communication, to communicate with another device. The wireless communication may use at least one of cellular communication protocols, for example, long term evolution (LTE), long term evolution-advanced (LTE-A), code division multiple access (CDMA), wideband code division multiple access (WCDMA), a universal mobile telecommunications system (UMTS), wireless broadband (WiBro), or a global system for mobile communications (GSM). The wireless communication may include, for example, short-range communication. The short-range communication may include at least one of wireless fidelity (Wi-Fi), Bluetooth, near field communication (NFC), magnetic stripe transmission (MST), or GNSS.

An embodiment of this application further provides a chip system. As shown in FIG. 17, the chip system includes at least one processor 1401 and at least one interface circuit 1402. The processor 1401 and the interface circuit 1402 may be interconnected through a line. For example, the interface circuit 1402 may be configured to receive a signal from another apparatus (for example, a memory of a communication device). For another example, the interface circuit 1402 may be configured to send a signal to another apparatus (for example, the processor 1401). For example, the interface circuit 1402 may read instructions stored in the memory, and send the instructions to the processor 1401. When the instructions are executed by the processor 1401, the communication device is caused to perform the steps in the foregoing embodiments. Certainly, the chip system may further include another discrete device. This is not specifically limited in embodiments of this application.

An embodiment of this application further provides a computer storage medium. The computer storage medium includes computer instructions. When the computer instructions run on the foregoing communication device, the communication device is caused to perform functions or steps performed by the mobile phone in the foregoing method embodiments.

An embodiment of this application further provides a computer program product. When the computer program product runs on a computer, the computer is caused to perform functions or steps performed by the mobile phone in the foregoing method embodiments.

The foregoing descriptions about implementations allow a person skilled in the art to clearly understand that, for the purpose of convenient and brief description, division of the foregoing functional modules is used as an example for illustration. During actual application, the foregoing functions can be allocated to different functional modules for completion based on a requirement, that is, an inner structure of an apparatus is divided into different functional modules to complete all or a part of the functions described above.

In several embodiments provided in this application, it should be understood that the disclosed apparatuses and methods may be implemented in other manners. For example, the described apparatus embodiments are merely examples. For example, the division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may be one or more physical units, may be located in one place, or may be distributed on different places. Some or all of the units may be selected based on an actual requirement to achieve the objective of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps in the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method, applied to a first device, wherein the method comprises:

obtaining a first reference signal received power RSRP set through a first time of beam sweeping;

reporting a first reference RSRP value, wherein the first reference RSRP value is determined from the first RSRP set;

obtaining a second RSRP set through a second time of beam sweeping; and

reporting a first differential RSRP set based on the second RSRP set and the first reference RSRP value, wherein the first differential RSRP set is obtained by performing differential calculation on an RSRP value in the second RSRP set and the first reference RSRP value.

2. The method according to claim 1, wherein reporting the first reference RSRP value comprises: reporting the first reference RSRP value and a second differential RSRP set, wherein the second differential RSRP set is obtained by performing differential calculation on an RSRP value other than the first reference RSRP value in the first RSRP set and the first reference RSRP value.

3. A data transmission method, applied to a second device, wherein the method comprises:

receiving a first reference RSRP value, wherein the first reference RSRP value is determined by a first device from a first RSRP set obtained through a first time of beam sweeping;

receiving a first differential RSRP set, wherein the first differential RSRP set is obtained by the first device by performing differential calculation on an RSRP value in a second RSRP set obtained by the first device through a second time of beam sweeping and the first reference RSRP value; and

obtaining the second RSRP set based on the first reference RSRP value and the first differential RSRP set, wherein the second RSRP set is obtained by the second device by performing inverse differential calculation on an RSRP value in the first differential RSRP set and the first reference RSRP value.

4. The data transmission method according to claim 3, wherein the method further comprises:

receiving a second differential RSRP set, wherein the second differential RSRP set is obtained by the first device by performing differential calculation on an RSRP value other than the first reference RSRP value in the first RSRP set and the first reference RSRP value, wherein

the second differential RSRP set, the first differential RSRP set, and the first reference RSRP value are input into an artificial intelligence AI model; or

obtaining the first RSRP set based on the first reference RSRP value and the second differential RSRP set, wherein an RSRP value other than the first reference RSRP value in the first RSRP set is obtained by performing inverse differential calculation on an RSRP value in the second differential RSRP set and the first reference RSRP value, wherein

the first RSRP set and the second RSRP set are input into an AI model.

5. A data transmission method, applied to a first device, wherein the method comprises:

obtaining a first RSRP set through a first time of beam sweeping;

obtaining a second RSRP set through a second time of beam sweeping;

obtaining predicted RSRP sets based on the first RSRP set and the second RSRP set, wherein there are a plurality of predicted RSRP sets, and the plurality of predicted RSRP sets comprise a first predicted RSRP set and a second predicted RSRP set;

reporting a second reference RSRP value based on the first predicted RSRP set, wherein the second reference RSRP value is determined from the first predicted RSRP set; and

reporting a first target differential RSRP set based on the second predicted RSRP set and the second reference RSRP value, wherein the first target differential RSRP set is obtained by performing differential calculation on an RSRP value in the second predicted RSRP set and the second reference RSRP value.

6. The data transmission method according to claim 5, wherein reporting the second reference RSRP value based on the first predicted RSRP set comprises: reporting the second reference RSRP value and a second target differential RSRP set based on the first predicted RSRP set, wherein the second target differential RSRP set is obtained by performing differential calculation on an RSRP value other than the second reference RSRP value in the first predicted RSRP set and the second reference RSRP value.

7. The data transmission methods according to claim 5 or 6, wherein obtaining the predicted RSRP sets based on the first RSRP set and the second RSRP set comprises:

obtaining the predicted RSRP sets through prediction by using an AI model based on the first RSRP set and the second RSRP set.

8. A data transmission method, applied to a second device, wherein the method comprises:

receiving a second reference RSRP value, wherein the second reference RSRP value is determined by a first device from a first predicted RSRP set, the first predicted RSRP set is in the predicted RSRP sets, and the predicted RSRP sets are obtained by the first device through prediction based on the first RSRP set and the second RSRP set;
obtaining the first predicted RSRP set based on the second reference RSRP value;
receiving a first target differential RSRP set, wherein the first target differential RSRP set is obtained by performing differential calculation on an RSRP value in the second predicted RSRP set and the second reference RSRP value, and the second predicted RSRP set is in the predicted RSRP sets; and
obtaining the second predicted RSRP set based on the second reference RSRP value and the first target differential RSRP set, wherein the second predicted RSRP set is obtained by performing inverse differential calculation on an RSRP value in the first target differential RSRP set and the second reference RSRP value.

9. The method according to claim 8, wherein the method further comprises:

receiving a second target differential RSRP set, wherein the second target differential RSRP set is obtained by the first device by performing differential calculation on an RSRP value other than the second reference RSRP value in the first predicted RSRP set and the second reference RSRP value; and
obtaining the first predicted RSRP set based on the second reference RSRP value comprises:
obtaining the first predicted RSRP set based on the second reference RSRP value and the second target differential RSRP set, wherein the RSRP value other than the second reference RSRP value in the first predicted RSRP set is obtained by performing inverse differential calculation on an RSRP value in the second target differential RSRP set and the second reference RSRP value.

10. An electronic device, wherein the electronic device comprises a memory and a processor, the memory is coupled to the processing unit, the memory is configured to store computer program code, the computer program code comprises computer instructions, and when the processing unit executes the computer instructions, the electronic device is caused to perform the method according to claim 1 or 2, the electronic device is caused to perform the method according to claim 3 or 4, the electronic device is caused to perform the method according to any one of claims 5 to 7, or the electronic device is caused to perform the method according to claim 8 or 9.

11. An electronic device, comprising a processor, wherein the processor is configured to: after being coupled to a memory and reading instructions in the memory, perform the method according to claim 1 or 2, the method according to claim 3 or 4, the method according to any one of claims 5 to 7, or the method according to claim 8 or 9 based on the instructions.

12. A chip system, comprising a processor and an interface circuit, wherein the processor and the interface circuit are interconnected through a line, the interface circuit is configured to read instructions stored in a memory, and when the instructions are executed by the processor, the chip system performs the method according to claim 1 or 2, the chip system performs the method according to claim 3 or 4, the chip system performs the method according to any one of claims 5 to 7, or the chip system performs the method according to claim 8 or 9.

13. A computer-readable storage medium, comprising computer instructions, wherein when the computer instructions are run on an electronic device, the electronic device is caused to perform the method according to claim 1 or 2, the chip system is caused to perform the method according to claim 3 or 4, the chip system is caused to perform the method according to any one of claims 5 to 7, or the chip system is caused to perform the method according to claim 8 or 9.

14. A computer program product, comprising a computer program, wherein when the computer program is executed by a processor, the method according to claim 1 or 2 is implemented; when the computer program is executed by a processor, the method according to claim 3 or 4 is implemented; when the computer program is executed by a processor, the method according to any one of claims 5 to 7 is implemented; or when the computer program is executed by a processor, the method according to claim 8 or 9 is implemented.

15. An electronic device, wherein the electronic device has a function of implementing the method according to claim 1 or 2, the electronic device has a function of implementing the method according to claim 3 or 4, the electronic device has a function of implementing the method according to any one of claims 5 to 7, or the electronic device has a function of implementing the method according to claim 8 or 9; and the function may be implemented by using hardware, and the hardware comprises one or more modules corresponding to the function; or the function may be implemented by hardware executing corresponding software, and the software comprises one or more modules corresponding to the function.

Narrow beam

Wide beam

FIG. 1

Wide beam                    Narrow beam

FIG. 2

FIG. 3

FIG. 4

EP 4 730 886 A1

FIG. 5

$$y = f\left(\sum_{i=0}^{n} d_i x_i + b\right)$$

Neuron

FIG. 6

FIG. 7

23

FIG. 8

First entity

Second entity

| Reference RSRP value | RSRP report value | RSRP report value | RSRP report value |

| RSRP report value | RSRP report value | RSRP report value | RSRP report value |

| RSRP report value | RSRP report value | RSRP report value | RSRP report value |

| RSRP report value | RSRP report value | RSRP report value | RSRP report value |

...

FIG. 9

First entity —— Second entity

FIG. 10

FIG. 11A

FIG. 11B

```
┌──────────────────┐              ┌──────────────────┐
│   Base station   │              │     Terminal     │
└──────────────────┘              └──────────────────┘
        │        First time of beam sweeping        │
        │◄─────────────────────────────────────────►│
        │              ┌─────────────────────────────┤
        │              │ S101: Obtain a first RSRP set│
        │              │ through the first time of beam│
        │              │          sweeping            │
        │              └─────────────────────────────┤
        │      S102: First reference RSRP            │
        │    value, where the first reference        │
        │      RSRP value is determined              │
        │       from the first RSRP set              │
        │◄───────────────────────────────────────────│
        │      Second time of beam sweeping          │
        │◄─────────────────────────────────────────►│
        │              ┌─────────────────────────────┤
        │              │ S103: Obtain a second RSRP   │
        │              │ set through the second time of│
        │              │        beam sweeping         │
        │              └─────────────────────────────┤
        │      S104: Report a first differential     │
        │      RSRP set based on the second          │
        │         RSRP set and the first             │
        │        reference RSRP value                │
        │◄───────────────────────────────────────────│
        ├──────────────────────────────┐             │
        │ S105: Obtain the second RSRP │             │
        │ set based on the first reference│          │
        │      RSRP value and the first │             │
        │       differential RSRP set  │             │
        ├──────────────────────────────┘             │
        │                                            │
```

FIG. 12

FIG. 13

| Base station | | Terminal |
|---|---|---|

First time of beam sweeping

S1201: Obtain a first RSRP set through the first time of beam sweeping

Second time of beam sweeping

S1202: Obtain a second RSRP set through the second time of beam sweeping

S1203: Obtain predicted RSRP sets based on the first RSRP set and the second RSRP set, where there are a plurality of predicted RSRP sets, and the plurality of predicted RSRP sets include a first predicted RSRP set and a second predicted RSRP set

S1204: Report a second reference RSRP value based on the first predicted RSRP set, where the second reference RSRP value is determined from the first predicted RSRP set

S1205: Obtain the first predicted RSRP set based on the second reference RSRP value

S1206: Report a first target differential RSRP set based on the second predicted RSRP set and the second reference RSRP value

S1207: Obtain the second predicted RSRP set based on the second reference RSRP value and the first target differential RSRP set

FIG. 14

| Base station | | Terminal |
| --- | --- | --- |

Observation window

```
n times of beam sweeping
```

Obtain predicted RSRP sets through AI-based beam prediction

| **Second reference RSRP value** | RSRP report value | RSRP report value | RSRP report value |
| --- | --- | --- | --- |

Second target differential RSRP set

Obtain a first predicted RSRP set based on the second reference RSRP value

| RSRP report value | RSRP report value | RSRP report value | RSRP report value |
| --- | --- | --- | --- |

First target differential RSRP set

Prediction window

Obtain a second predicted RSRP set based on the second reference RSRP value and the first target differential RSRP set

Determine whether the predicted RSRP sets meet a preset requirement; and if the predicted RSRP sets meet the preset requirement, select, from the predicted RSRP sets, beams corresponding to the RSRP set; or if the predicted RSRP sets do not meet the preset requirement, perform another round of beam sweeping

FIG. 15

1301

1305

Processing module ←→ Communication module

Storage module 1303

**FIG. 16**

Chip system

1401

Processor

1401

Processor

Interface circuit

Interface circuit

1402

1402

**FIG. 17**

## INTERNATIONAL SEARCH REPORT

| International application No. |
|---|
| **PCT/CN2024/104233** |

**A.    CLASSIFICATION OF SUBJECT MATTER**

H04W72/044(2023.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS: CNTXT; CNKI; USTXT; EPTXT; WOTXT; 3GPP: 参考信号接收功率, 上报, 报告, 基站, 终端, 差分, 差值, 开销, 参考, rsrp, report, bs, ue, differential, reference

**C.    DOCUMENTS CONSIDERED TO BE RELEVANT**

| Category* | Citation of document, with indication, where appropriate, of the relevant passages | Relevant to claim No. |
|---|---|---|
| A | US 2020267684 A1 (MEDIATEK INC.) 20 August 2020 (2020-08-20) description, paragraphs [0019]-[0038] | 1-15 |
| A | US 2020067590 A1 (INTEL IP CORP.) 27 February 2020 (2020-02-27) entire document | 1-15 |
| A | CN 109151882 A (SPREADTRUM COMMUNICATIONS (SHANGHAI) CO., LTD.) 04 January 2019 (2019-01-04) entire document | 1-15 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 September 2024** | **15 September 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/104233**

| Patent document cited in search report | | | Publication date (day/month/year) | Patent family member(s) | | | Publication date (day/month/year) |
|---|---|---|---|---|---|---|---|
| US | 2020267684 | A1 | 20 August 2020 | WO | 2020164609 | A1 | 20 August 2020 |
| US | 2020067590 | A1 | 27 February 2020 | US | 10924175 | B2 | 16 February 2021 |
| | | | | EP | 4270811 | A1 | 01 November 2023 |
| | | | | EP | 3602831 | A1 | 05 February 2020 |
| | | | | EP | 3602831 | B1 | 13 March 2024 |
| | | | | WO | 2018183991 | A1 | 04 October 2018 |
| CN | 109151882 | A | 04 January 2019 | CN | 109151882 | B | 20 July 2021 |

Form PCT/ISA/210 (patent family annex) (July 2022)

**REFERENCES CITED IN THE DESCRIPTION**

**Patent documents cited in the description**

- CN 202310859018